# EUROPEAN PATENT APPLICATION

(11) **EP 4 679 675 A1**
(43) Date of publication of application: **14.01.2026**
(21) Application number: 23926154.8
(22) Date of filing: 03.03.2023
(51) Int. Cl.: H02J 50/12, H02J 7/00

(54) **POWER TRANSMISSION DEVICE AND NON-CONTACT POWER SUPPLY SYSTEM**

(71) Applicant: MITSUBISHI ELECTRIC CORPORATION, Chiyoda-ku Tokyo 100-8310 (JP)
(72) Inventor: YOSHIDA Hidehito, Tokyo 100-8310 (JP); IWABUKI Hiroyasu, Tokyo 100-8310 (JP); SUZUKI Yasuhiro, Tokyo 100-8310 (JP); HIGASHINO Makoto, Tokyo 100-8310 (JP)
(74) Representative: Hoffmann Eitle
(86) International application number: PCT/JP2023/007967
(87) International publication number: WO 2024/184938

(57) **Abstract**

Provided are a power transmission resonance circuit (11) that transmits power to a power reception device (2) in a non-contact manner via a power transmission coil (110); a resonance tuning circuit (14) that includes a circuit connection coil (140) disposed so as to be magnetically coupled to the power transmission coil (110) and not to be magnetically coupled to a power reception coil (200), and a variable capacitance circuit (145) connected in series with the circuit connection coil (140), and adjusts a capacitive reactance component of the power transmission resonance circuit (11) via the circuit connection coil (140); and a controller (13) that controls an operation of the resonance tuning circuit (14) in accordance with the resonance state of the power reception coil (200) and the power transmission coil (110).

## Description

### Technical Field

The present application relates to a power transmission device and a wireless power supply system.

### Background Art

There is a wireless power supply technique for transmitting electric power in a non-contact manner by magnetic coupling between coils disposed with a space therebetween. When the magnetic coupling between the coils is weak, the power factor is improved by utilizing the resonance phenomenon, and highly efficient wireless power supply is possible. However, under a condition deviated from the resonance state, the power transmission efficiency may be significantly reduced.
Although the wireless power supply is a technique that is expected to be applied to a moving object, the wireless power supply is under an environment in which the electrical characteristics between the resonance coils are likely to fluctuate, and the resonance condition is likely to be deviated, and therefore the resonance tuning for satisfying the resonance condition is very important.

In consideration of the above situation, a wireless power supply device (for example, refer to Patent Document 1) that controls a resonance circuit including a capacitor and a switching element, which are provided on a power transmission side, to control a capacitive reactance component and implement a desired circuit operation has been proposed. Further, a technique has been proposed in which a resonance condition is tuned by a reactance tuning circuit connected to a second coil magnetically coupled to a power transmission coil among coils of a power reception device (for example, refer to Patent Document 2).

### Prior Art Document

### Patent Document

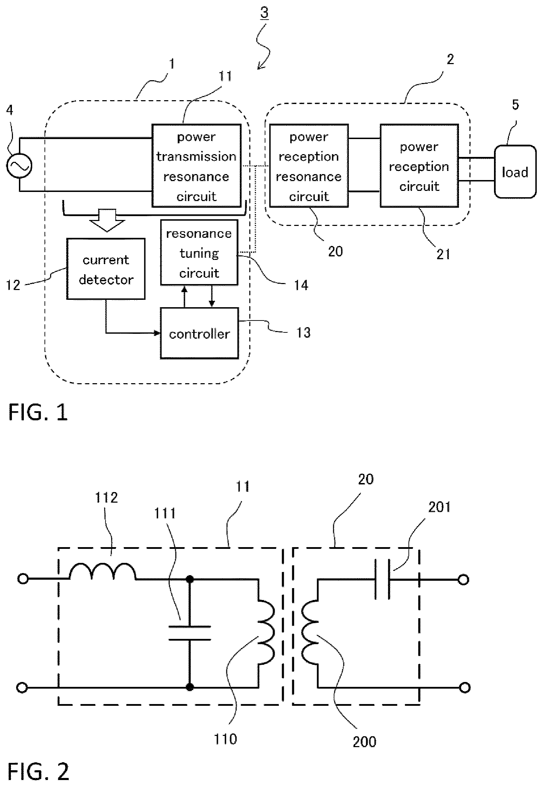

Patent Document 1: Japanese Patent Application Laid-Open No. 2020-156302 (paragraphs 0013 to 0015, 0030 to 0034, FIG. 1)
Patent Document 2: Japanese Patent Application Laid-Open Publication (Translation of PCT Application) No. 2018-511293 (paragraphs 0045 to 0052, FIG. 1 to FIG. 2)

### Summary of the Invention

### Problems to be Solved by the Invention

However, when the capacitive reactance component of the resonance circuit is controlled, it is necessary to dispose a switching element for the control on a path in which a large current is likely to flow. Therefore, there is a problem that efficiency is reduced due to the conduction loss of the switching element depending on a circuit configuration. In contrast, when the resonance condition is tuned by the reactance tuning circuit connected to the second coil of the power reception device, the increase in an on-state loss can be suppressed because the semiconductor switch is not disposed on the path through which the resonance current flows. However, since the configuration is based on the premise that the tuning circuit is connected to the power reception device, there is a problem in that the cost increases when the configuration is applied to a system including a plurality of power reception devices.

The present application discloses a technique for solving the above-described problems, and an object of the present application is to provide a resonance tuning method that achieves both suppression of the loss increase and suppression of the cost increase.

### Means for Solving the Problems

A power transmission device disclosed in the present application includes: a power transmission resonance circuit that includes a power transmission coil to be magnetically coupled to a power reception coil of a power reception device, converts electric power supplied from a power supply into magnetic energy, and transmits power to the power reception device via the power transmission coil; a resonance tuning circuit that includes a circuit connection coil and a variable capacitance circuit, the circuit connection coil being disposed so as to be magnetically coupled to the power transmission coil and not to be magnetically coupled to the power reception coil even when the power transmission coil is magnetically coupled to the power reception coil, the variable capacitance circuit being connected in series with the circuit connection coil, the resonance tuning circuit adjusting a capacitive reactance component of the power transmission resonance circuit via the circuit connection coil; and a controller to control an operation of the resonance tuning circuit in accordance with a resonance state between the power reception coil and the power transmission coil.

### Advantageous Effect of Invention

According to the power transmission device disclosed in the present application, the capacitive reactance component is adjusted via the coil magnetically coupled to the power transmission coil independently of the power reception coil, and thus it is possible to obtain a power transmission device and a wireless power supply device that achieve both suppression of a loss increase and suppression of a cost increase.

### Brief Description of the Drawings

FIG. 1 is a block diagram for describing a configuration of a wireless power supply system according to Embodiment 1.
FIG. 2 is a circuit diagram for describing a configuration of a power transmission resonance circuit and a power reception resonance circuit in the wireless power supply system according to Embodiment 1.
FIG. 3 is a circuit diagram for describing a configuration of a power reception device constituting the wireless power supply system according to Embodiment 1.
FIG. 4 is a block diagram for describing a relationship between a coil of the power transmission device and a coil of the power reception device that constitute the wireless power supply system according to Embodiment 1.
FIG. 5 is a circuit diagram showing a configuration example of a resonance tuning circuit of the power transmission device constituting the wireless power supply system according to Embodiment 1.
FIG. 6A and FIG. 6B are schematic circuit diagrams showing respective different current paths that change when the resonance tuning circuit operates.
FIG. 7 is a diagram showing an operation waveform of each of locations in the resonance tuning circuit of the power transmission device constituting the wireless power supply system according to Embodiment 1.
FIG. 8 is a circuit diagram showing a configuration example of a resonance tuning circuit of a power transmission device constituting a wireless power supply system according to Embodiment 2.
FIG. 9 is a block diagram showing an example of a hardware configuration of a controller of the power transmission device constituting the wireless power supply system according to each embodiment of the present application.

### Mode for Carrying out Invention

### Embodiment 1

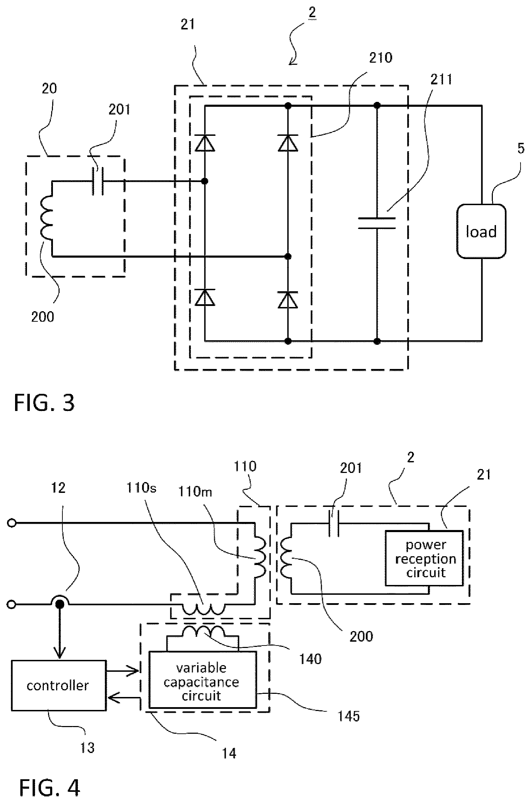

FIG. 1 to FIG. 7 are diagrams for describing a wireless power supply system and configurations and operations of a power transmission device and a power reception device constituting the wireless power supply system according to Embodiment 1, FIG. 1 is a block diagram showing a state in which the wireless power supply system is constituted by combining the power transmission device and the power reception device, FIG. 2 is a circuit diagram for describing a configuration of a power transmission resonance circuit and a power reception resonance circuit that perform magnetic coupling, and FIG. 3 is a circuit diagram for describing a configuration of the power reception device.

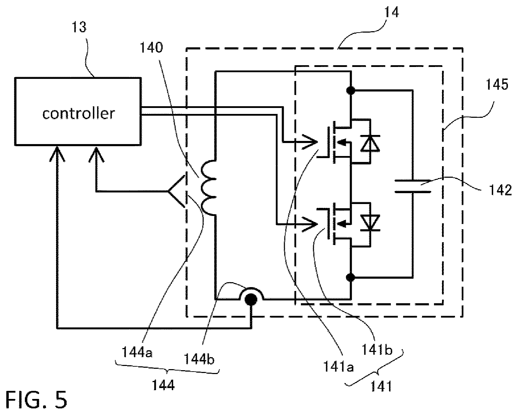

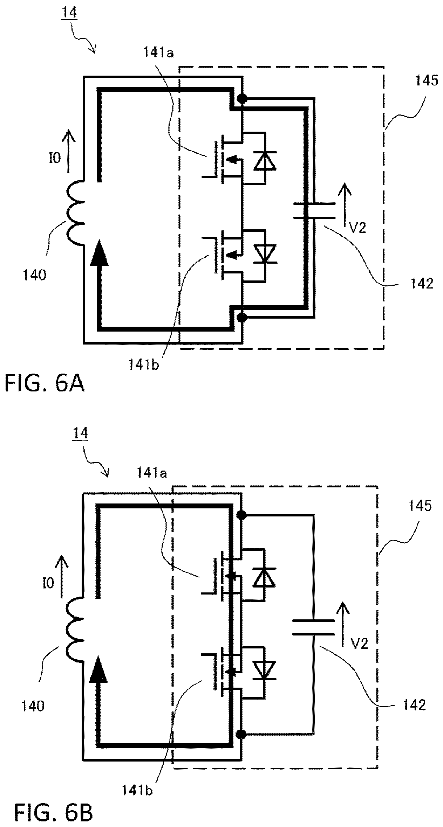

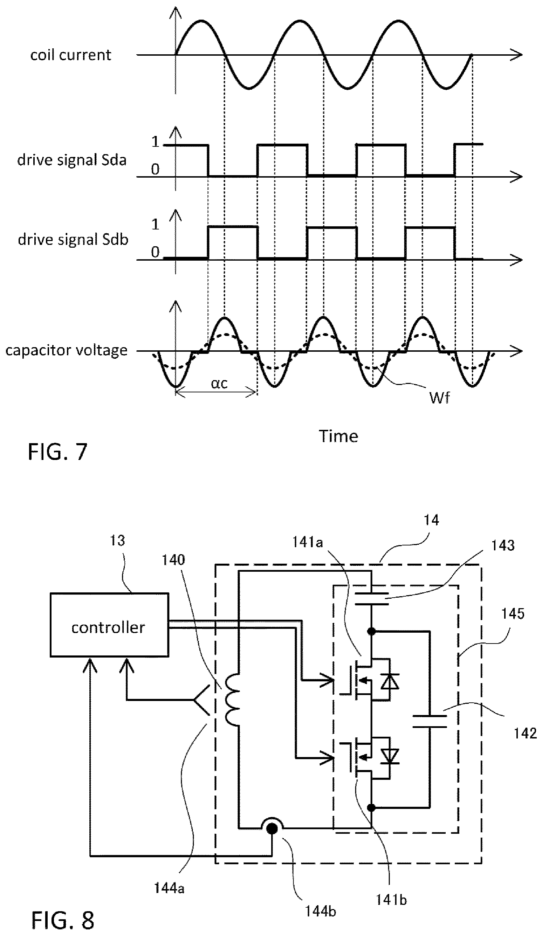

In addition, FIG. 4 is a block diagram for describing a magnetic connection relationship between a power transmission coil along with a circuit connection coil on the side of the power transmission device and a power reception coil on the side of the power reception device, and FIG. 5 is a circuit diagram showing a configuration example of a resonance tuning circuit of the power transmission device. FIG. 6A and FIG. 6B are schematic circuit diagrams showing respective different current paths that change when the resonance tuning circuit operates, and FIG. 7 is a diagram in which each of operation waveform diagrams for the current of the power transmission coil constituting the resonance tuning circuit of the power transmission device, drive signals for respective two semiconductor switches, and tuning capacitor voltages are arranged in synchronization in the vertical direction.

As shown in FIG. 1, the wireless power supply system 3 includes a power transmission device 1 that converts electric power supplied from an AC power supply 4 into magnetic energy and outputs the magnetic energy, and a power reception device 2 that receives the converted magnetic energy by magnetic coupling and supplies desired electric power to a load 5 or the like. As a characteristic configuration, a resonance tuning circuit 14 for performing resonance tuning is provided in a portion other than a path through which the main power of the power transmission device 1 is transmitted. Here, before describing the characteristic configuration, a basic configuration of the wireless power supply system will be described.

As shown in FIG. 2, the power transmission device 1 includes a power transmission resonance circuit 11 that is configured by a power transmission coil 110 and at least one power transmission-side resonance capacitor 111 and is magnetically coupled to a power reception resonance circuit 20 (power reception coil 200) of the power reception device 2. The power transmission resonance circuit 11 may include a resonance reactor 112 different from the power transmission coil 110 as shown in the figure, or may include another resonance capacitor. The power transmission coil 110 and the power transmission-side resonant capacitor 111 are designed to satisfy a resonance condition at the output frequency of the AC power supply 4.

When the output waveform of the AC power supply 4 is a waveform including a harmonic component such as a rectangular waveform, the power transmission resonance circuit 11 is typically designed to satisfy the resonance condition in the fundamental wave component of the output waveform, but may be designed to resonate with respect to the harmonic component. Note that the power transmission resonance circuit 11 shown in FIG. 2 is one of various resonance circuit configurations, and the configuration of the power transmission resonance circuit 11 is not limited thereto.

The power reception device 2 includes a power reception resonance circuit 20 that is magnetically coupled to the above-described power transmission resonance circuit 11 (power transmission coil 110) and converts magnetic energy into electric energy, and a power reception circuit 21 that converts the electric energy converted by the power reception resonance circuit 20 into electric power applicable to the load 5 and outputs the electric power.

The power reception resonance circuit 20 is configured by the power reception coil 200 and at least one power reception-side resonance capacitor 201, and may be configured to include a resonance reactor or a resonance capacitor different from the power reception coil 200. The power reception coil 200 and the power reception-side resonance capacitor 201 are designed to satisfy a resonance condition at the output frequency of the AC power supply 4 via the power transmission coil 110. When the output waveform of the AC power supply 4 is a waveform including a harmonic component such as a rectangular waveform, the power reception resonance circuit 20 is typically designed to satisfy the resonance condition in the fundamental wave component of the output waveform, but may be designed to resonate with respect to the harmonic component.

Note that the power reception resonance circuit 20 shown in FIG. 2 has a configuration in which one power reception-side resonance capacitor 201 is connected in series with the power reception coil 200, but this is only one of various resonance circuit configurations, and the configuration of the resonance circuit is not limited thereto.

The power reception circuit 21 is configured by, for example, a rectifier circuit 210 and a filter 211 as shown in FIG. 3, and the load 5 is connected to output terminals of the power reception circuit 21. The rectifier circuit 210 has a configuration in which, for example, four diode elements are connected in a full-bridge manner, and outputs DC power upon receiving AC power output from the power reception resonance circuit 20.

The filter 211 is, for example, a C filter configured by a capacitor, and attenuates high-frequency components included in the voltage and the current output from the rectifier circuit 210. Depending on the system configuration, a different filter configuration such as an LC filter configured by a capacitor and a reactor may be applied. The load 5 is, for example, a motor that consumes power or a battery for power storage. The load configuration may include a power converter for adjusting the voltage or current of the load.

The AC power supply 4 is a power supply that outputs a high-frequency current or voltage. The configuration may include a power converter such as an inverter or a DC/DC converter, and the output waveform may be a waveform including a plurality of frequency components such as a rectangular waveform.

On the premise of the basic configuration as the above-described wireless power supply system, the power transmission device 1 of the wireless power supply system 3 of the present application will be described in detail with reference to FIG. 1. The power transmission device 1 includes the above-described power transmission resonance circuit 11, the resonance tuning circuit 14 that is independently of the power reception coil 200 and magnetically connected to the power transmission resonance circuit 11 and performs resonance tuning of the power transmission resonance circuit 11, and a controller 13 that controls the operation of the resonance tuning circuit 14. Further, the power transmission device includes a current detector 12 for detecting a current of a power transmission-side circuit, and the controller 13 controls the operation of the resonance tuning circuit 14 in accordance with a detected current output from the current detector 12.

As shown in FIG. 4, the power transmission coil 110 of the power transmission resonance circuit 11 is configured by a main coil portion 110m that is to be magnetically coupled to the power reception coil 200 and a sub coil portion 110s that is not to be magnetically coupled to the power reception coil 200 but to be magnetically coupled to a circuit connection coil 140 of the resonance tuning circuit 14. That is, in the wireless power supply system 3 of the present application, one power reception device 2 (power reception coil 200) and one resonance tuning circuit 14 (circuit connection coil 140) are configured to be magnetically connected to respective different portions of one power transmission coil 110.

On the other hand, the current detector 12 is disposed in the circuit so as to detect a current flowing through the power transmission coil 110, and the obtained current information is input to the controller 13. The controller 13 generates a control signal for controlling the resonance tuning circuit 14 on the basis of the obtained current information. The power reception device 2 and the resonance tuning circuit 14 are not to be magnetically coupled to each other or are to be coupled to each other in an extremely weak manner (for example, the coupling coefficient between the power transmission coil 110 and the power reception coil 200 is 0.01 or less).

In this way, the resonance tuning circuit 14 is independently of the power reception coil 200 and is to be substantially magnetically coupled only to the power transmission coil 110, and thus it is possible to prevent the system from being complicated. Further, the number of the power reception devices 2 and the resonance tuning circuits 14 can be set independently. As a result, for example, it is possible to easily cope with a system change such as a change from a system in which power is supplied to a single power reception device 2 to a system in which power is supplied to a plurality of power reception devices 2.

The resonance tuning circuit 14 includes the circuit connection coil 140 to be magnetically coupled to the sub coil portion 110s, and a variable capacitance circuit 145 that outputs a signal from the circuit connection coil 140 to the controller 13 and changes the capacitance of a capacitor on the basis of a control signal from the controller 13. Further, as shown in FIG. 5, the resonance tuning circuit is provided with an operation detector 144 for detecting an electrical operation of the circuit connection coil 140.

The variable capacitance circuit 145 includes a bidirectional switch 141 capable of cutting off a current in both directions and a tuning capacitor 142 whose equivalent capacitance changes according to the operation of the bidirectional switch 141. The bidirectional switch 141 and the tuning capacitor 142 are connected in series with respect to the circuit connection coil 140, and the bidirectional switch 141 and the tuning capacitor 142 are connected in parallel to each other.

The bidirectional switch 141 is configured by, for example, two semiconductor switches 141a and 141b, and is configured to be able to cut off current in both directions by connecting the two semiconductor switches 141a and 141b in series in opposite directions. The semiconductor switches 141a and 141b may be replaced with a different configuration or a different circuit component as long as it has a function as the bidirectional switch.

The operation detection means 144 is configured by a voltage detector 144a for detecting a voltage applied to the circuit connection coil 140 or a current detector 144b for detecting a current flowing through the circuit connection coil 140. The voltage detector 144a and the current detector 144b are installed so as to be able to detect the voltage applied to the circuit connection coil 140 and the current flowing through the circuit connection coil 140, respectively, and information on the detected voltage and current is input to the controller 13.

Drive signals for the semiconductor switches 141a and 141b are generated by the controller 13 on the basis of the current information of the power transmission coil 110 and the voltage and current information of the circuit connection coil 140. Note that, although both the voltage and the current of the circuit connection coil 140 are detected and input to the controller 13 in FIG. 5, one of the detection means may be removed and the drive signals for the switches 141a and 141b may be generated on the basis of the information of one of the voltage and the current.

Next, a change in the current path in the variable capacitance circuit 145 during the operation of the resonance tuning circuit 14 will be described. The tuning capacitor 142 is controlled to be in a circuit connection state or an off state in accordance with a voltage and a current generated across the circuit connection coil 140 and on/off states of the semiconductor switches 141a and 141b. An equivalent capacitance of the capacitor can be controlled by controlling the switching between the two states, i.e., the circuit connection state and the off state.

FIG. 6A shows a current path when the tuning capacitor 142 is in the circuit connection state. In the circuit connection state, the current is cut off by the bidirectional switch 141, and the tuning capacitor 142 is connected to the power transmission resonance circuit 11 via the circuit connection coil 140, and thus the tuning capacitor functions as a reactance element. FIG. 6B shows a current path when the tuning capacitor 142 is in the off state. In the off state, both ends of the circuit connection coil 140 are shortcircuited via the bidirectional switch 141, and the tuning capacitor 142 is not connected to the power transmission resonance circuit 11, and thus the tuning capacitor does not function as a reactance element. By switching the connection state of the tuning capacitor 142 by controlling the operation of the bidirectional switch 141 in this way, it is possible to change the magnitude of the reactance component that is to be magnetically coupled to the power transmission coil 110.

FIG. 7 shows an example of operation waveforms in the resonance tuning circuit 14 when the switching between the two states, i.e., the circuit connection state and the off state, is controlled. In FIG. 7, the uppermost stage shows an outline of a current waveform (coil current I0) of the circuit connection coil 140 that is to be magnetically coupled to the sub coil portion 110s of the power transmission coil 110, and waveforms of a drive signal Sda for the switch 141a, a drive signal Sdb for the switch 141b, and a voltage waveform of the tuning capacitor 142 (capacitor voltage V2) are shown in this order toward the bottom.

The current waveform of the circuit connection coil 140 and the voltage waveform of the tuning capacitor 142 are positive in the direction indicated by the arrows in FIG. 6A and FIG. 6B. In the waveform example of FIG. 7, a resonance system is assumed in which the current of the power transmission coil 110 is sinusoidal, and the coil current 10 is drawn in the form of a sinusoidal wave. In the drive signal Sda of the semiconductor switch 141a and the drive signal Sdb of the semiconductor switch 141b, it is indicated that 1 represents the on state and 0 represents the off state.

The drive signals Sda and Sdb are synchronized with the current waveform of the circuit connection coil 140, and are output by adjusting a control phase αc so as to have the same frequency as the current waveform of the power transmission coil 110. The voltage waveform of the tuning capacitor 142 is a waveform including a period in which the voltage is zero, and a duration of the period in which the voltage is zero can be tuned by controlling the phase relationship between the current waveform of the power transmission coil 110 and the drive signals Sda and Sdb of the switches 141a and 141b.

A broken line of the voltage waveform of the tuning capacitor 142 is an outline of a fundamental wave component Wf. Since the fundamental wave component Wf is determined by the duration of the period in which the capacitor voltage V2 is zero, the capacitor voltage V2 can be controlled by controlling the duration of the zero period. That is, an effective value of the capacitance, which is an impedance component of the tuning capacitor 142, can be adjusted.

The current of the power transmission coil 110 in an ideal state (resonant state) is determined by a design. For example, an ideal current value of the power transmission coil 110 is determined on the basis of circuit constants of the power transmission resonance circuit 11. The current value of the power transmission coil 110 obtained from the current detector 12 is compared with the ideal current value of the power transmission coil 110, thereby obtaining the drive signals Sda and Sdb of the semiconductor switches 141a and 141b.

To be more specific, when the current value of the power transmission coil 110 obtained from the current detector 12 is larger than the ideal current value (design value) of the power transmission coil 110, the current value of the power transmission coil 110 is decreased by decreasing the duration of the period in which the capacitor voltage V2 is zero. On the other hand, when the current value of the power transmission coil 110 obtained from the current detector 12 is smaller than the design value, the current value of the power transmission coil 110 is increased by increasing the duration of the period in which the capacitor voltage V2 is zero. With the control in this way, the current of the power transmission coil 110 can be kept constant and stable operation can be performed.

That is, the resonance state is grasped by the information in the power transmission device 1, and the resonance state of the magnetic coupling between the power transmission coil 110 and the power reception coil 200 is optimized by using the information in the power transmission device 1, so that the efficiency of the wireless power supply can be improved.

Note that, in the example of FIG. 7, the drive signals Sda and Sdb for the switches 141a and 141b are complementary signals, but a period in which both are on and a period in which both are off may be provided, and the time ratio between on and off may not necessarily be 1:1.

As described above, according to the power transmission device 1 of Embodiment 1, the resonance tuning circuit 14 is provided so as to be magnetically coupled to the power transmission coil 110 independently of the power reception coil 200. Since the resonance tuning is performed on the basis of the information on the current flowing through the power transmission coil 110, the resonance state can be tuned in accordance with the operation of the power transmission resonance circuit 11. Further, since the resonance tuning circuit 14 is included to be indirectly connected to the power transmission coil 110, the resonance current flowing through the power transmission coil 110 can be prevented from flowing through the resonance tuning circuit 14, and an increase in the conduction loss due to the resonance current can be suppressed. Further, since the information of the device on the power reception side is not required, it is possible to easily cope with the increase or decrease in the number or arrangement of the power reception devices 2.

### Embodiment 2

In Embodiment 2, a voltage division compensation capacitor is added to the variable capacitance circuit described in Embodiment 1. FIG. 8 is a circuit diagram corresponding to FIG. 5 of Embodiment 1, showing a configuration example of a resonance tuning circuit, for describing a configuration and operation of a power transmission device constituting a wireless power supply system according to Embodiment 2. Note that Embodiment 2 is the same as Embodiment 1 except for the addition of the voltage division compensation capacitor and the operation associated therewith, and thus the description of the same parts will be omitted, and FIG. 1 to FIG. 4 used for the description of Embodiment 1 will be referred to.

In Embodiment 2, as shown in FIG. 8, a voltage division compensation capacitor 143 is connected in series with respect to the circuit connection coil 140. Therefore, the voltage generated across the circuit connection coil 140 is divided by the parallel circuit of the tuning capacitor 142 and the bidirectional switch 141, and the voltage division compensation capacitor 143. As in Embodiment 1, the operation of the bidirectional switch 141 is controlled to switch the tuning capacitor 142 between the circuit connection state and the off state, thereby changing the equivalent capacitance and performing resonance tuning.

In this case, the difference from Embodiment 1 is the voltage applied to the bidirectional switch 141 when the bidirectional switch 141 is off. Since the voltage division compensation capacitor 143 is always present in the path of the current flowing through the resonance tuning circuit 14, the voltage applied to the bidirectional switch 141 has a value obtained by subtracting the voltage divided by the voltage division compensation capacitor 143 from the voltage generated across the circuit connection coil 140.

Therefore, as compared with the configuration of Embodiment 1, the voltage applied to the switches 141a and 141b constituting the bidirectional switch 141 is reduced, and thus a voltage rating required for the switches can also be reduced. A metal-oxide-semiconductor field-effect transistor (MOS-FET), which is a semiconductor switch typically used, has a characteristic of a trade-off between the voltage rating and the on-resistance, and thus the semiconductor switch is replaced with a semiconductor switch having a low voltage rating, so that reduction of the loss can be achieved by reducing the on-resistance.

As described above, according to the power transmission device 1 of Embodiment 2, the resonance tuning circuit 14 includes the voltage division compensation capacitor 143. Therefore, the switches 141a and 141b can be replaced with elements having a lower withstand voltage, as compared with the case where the same voltage is applied to the circuit connection coil 140. As a result, the use of a semiconductor switch having a small on-resistance can reduce the conduction loss, thereby achieving an effect of improving the efficiency.

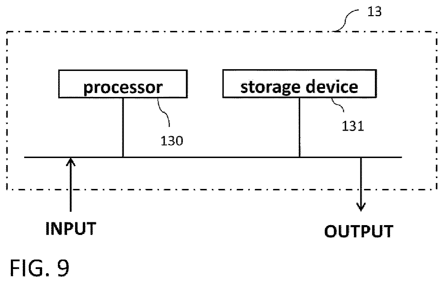

In each of the above-described embodiments, the controller 13 can be configured by a processor 130 and a storage device 131 shown in FIG. 9 as an example of hardware. The storage device includes a volatile storage device such as a random access memory and a nonvolatile auxiliary storage device such as a flash memory (not shown). Further, an auxiliary storage device such as a hard disk may be provided instead of the flash memory. The processor 130 executes a program input from the storage device 131. In this case, the program is input from the auxiliary storage device to the processor 130 via the volatile storage device. Further, the processor 130 may output data such as a calculation result to the volatile storage device of the storage device 131 or may store the data in the auxiliary storage device via the volatile storage device. The processor 130 may have a communication function, or may include a communication unit (not shown).

Although various exemplary embodiments and examples are described in the present application, various features, aspects, and functions described in one or more embodiments are not inherent in an application of the contents disclosed in a particular embodiment, and can be applicable alone or in their various combinations to each embodiment. Accordingly, countless variations that are not illustrated are envisaged within the scope of the art disclosed in the specification of the present application. For example, the case where at least one component is modified, added or omitted, and the case where at least one component is extracted and combined with a component disclosed in another embodiment are included.

For example, in FIG. 1, the AC power supply 4 is illustrated as a system power supply different from the power transmission device 1, but this is not a limitation. In order to supply desired AC power to the power transmission resonance circuit 11, a power conversion device that converts power from AC system power supply or DC power supply into predetermined AC power may be used as the AC power supply 4. That is, the AC power supply 4 may be used as a device constituting the power transmission device 1. Further, the power reception device 2 also provides a DC output to the load 5 in the above example, but this is not a limitation, and the power reception device may provide an AC output.

As described above, the power transmission device 1 of the present application includes: the power transmission resonance circuit 11 that includes the power transmission coil 110 to be magnetically coupled to the power reception coil 200 of the power reception device 2, converts electric power supplied from the power supply (AC power supply 4) into magnetic energy, and transmits power to the power reception device 2 via the power transmission coil 110; the resonance tuning circuit 14 that includes the circuit connection coil 140 and the variable capacitance circuit 145, the circuit connection coil being disposed so as to be magnetically coupled to the power transmission coil 110 and not to be magnetically coupled to the power reception coil 200 even when the power transmission coil 110 is magnetically coupled to the power reception coil 200, the variable capacitance circuit being connected in series with the circuit connection coil 140, the resonance tuning circuit adjusting a capacitive reactance component of the power transmission resonance circuit 11 via the circuit connection coil 140; and the controller 13 to control an operation of the resonance tuning circuit 14 in accordance with a resonance state between the power reception coil 200 and the power transmission coil 110. Therefore, the capacitive reactance component can be adjusted by a circuit on the side of the power transmission device 1, which is different from the path through which the resonant current flows, whereby both suppression of a loss increase and suppression of a cost increase can be achieved.

The controller 13 controls the operation of the resonance tuning circuit 14 on the basis of at least one of a value of the voltage applied to the circuit connection coil 140 and a value of the current flowing through the circuit connection coil 140, and the current flowing through the power transmission coil 110. Therefore, the resonance state can be maintained only by the information in the power transmission device 1, and thus an increase in the cost can be suppressed even when application is made to a system including the power reception device 2.

The controller 13 increases or decreases the reactance component of the resonance tuning circuit 14 such that the current of the power transmission coil 110 becomes a predetermined value, and thus the resonance state can be reliably maintained only by the information in the power transmission device 1.

In this case, the controller 13 decreases the current of the power transmission coil 110 by increasing the reactance component of the resonance tuning circuit 14 when the current of the power transmission coil 110 is larger than a predetermined design value, and increases the current of the power transmission coil 110 by decreasing the reactance component of the resonance tuning circuit 14 when the current of the power transmission coil 110 is smaller than the predetermined design value, thereby more reliably maintaining the resonant state.

The variable capacitance circuit 145 is provided with the parallel circuit of the tuning capacitor 142 and the on/off switch (bidirectional switch 141), and the controller 13 is configured to change the capacitive reactance component (of the power transmission resonance circuit 11) by controlling the on/off operation of the on/off switch (bidirectional switch 141), whereby the capacitive reactance component can be adjusted by a simple operation.

When the on/off switch is the bidirectional switch 141 including two semiconductor switches connected in series in opposite directions to each other, the on/off switch with simple drive control, low rated current, and a low loss can be formed.

When the variable capacitance circuit 145 is provided with the voltage division compensation capacitor 143 connected in series with respect to the parallel circuit (of the tuning capacitor 142 and the bidirectional switch 141), the voltage applied to the on/off switch (bidirectional switch 141) can be further reduced, and therefore, an on/off switch with a lower rated current and a low loss can be used.

The controller 13 operates the on/off switch (bidirectional switch 141) in synchronization with the current of the circuit connection coil 140, and thus can reliably change the capacitance of the tuning capacitor 142 while the switching loss is reduced.

Alternatively, the controller 13 may operate the on/off switch (bidirectional switch 141) so as to match the frequency of the current flowing through the power transmission coil 110, and thus the capacitance of the tuning capacitor 142 can be reliably changed.

Further, the wireless power supply system 3 of the present application is configured to include the power transmission device 1 described above and one or more power reception devices 2 that receive power supply from the power transmission device 1 in a non-contact manner. Therefore, even when the power reception devices 2 are replaced, increased, or decreased, the capacitive reactance component can be adjusted by the circuit on the side of the power transmission device 1, which is different from the path through which the resonant current flows, whereby both suppression of a loss increase and suppression of a cost increase can be achieved.

### Description of Reference Numerals and Sign

1: power transmission device, 11: power transmission resonance circuit, 110: power transmission coil, 110m: main coil portion, 110s: sub coil portion, 12: current detector, 13: controller, 14: resonance tuning circuit, 140: circuit connection coil, 141: bidirectional switch (on/off switch), 142: tuning capacitor, 143: voltage division compensation capacitor, 145: variable capacitance circuit, 2: power reception device, 20: power reception resonance circuit, 200: power reception coil, 21: power reception circuit, 3: wireless power supply system, 4: AC power supply (power supply), 5: load

## Claims

1. A power transmission device comprising:
a power transmission resonance circuit that includes a power transmission coil to be magnetically coupled to a power reception coil of a power reception device, converts electric power supplied from a power supply into magnetic energy, and transmits power to the power reception device via the power transmission coil;
a resonance tuning circuit that includes a circuit connection coil and a variable capacitance circuit, the circuit connection coil being disposed so as to be magnetically coupled to the power transmission coil and not to be magnetically coupled to the power reception coil even when the power transmission coil is magnetically coupled to the power reception coil, the variable capacitance circuit being connected in series with the circuit connection coil, the resonance tuning circuit adjusting a capacitive reactance component of the power transmission resonance circuit via the circuit connection coil; and
a controller to control an operation of the resonance tuning circuit in accordance with a resonance state between the power reception coil and the power transmission coil.

2. The power transmission device according to claim 1, wherein the controller controls the operation of the resonance tuning circuit on a basis of at least one of a value of a voltage applied to the circuit connection coil and a value of a current flowing through the circuit connection coil, and a current flowing through the power transmission coil.

3. The power transmission device according to claim 1 or 2, wherein the controller controls the operation of the resonance tuning circuit such that the current of the power transmission coil becomes a predetermined value.

4. The power transmission device according to claim 3, wherein the controller decreases the current of the power transmission coil by increasing a reactance component of the resonance tuning circuit when the current of the power transmission coil is larger than a predetermined design value, and increases the current of the power transmission coil by decreasing the reactance component when the current of the power transmission coil is smaller than the predetermined design value.

5. The power transmission device according to any one of claims 1 to 4, wherein the variable capacitance circuit is provided with a parallel circuit of a tuning capacitor and an on/off switch, and the controller changes the capacitive reactance component by controlling an on/off operation of the on/off switch.

6. The power transmission device according to claim 5, wherein the on/off switch is a bidirectional switch including two semiconductor switches connected in series in opposite directions to each other.

7. The power transmission device according to claim 5 or 6, wherein the variable capacitance circuit is provided with a voltage division compensation capacitor connected in series with respect to the parallel circuit.

8. The power transmission device according to any one of claims 5 to 7, wherein the controller operates the on/off switch in synchronization with a current of the circuit connection coil.

9. The power transmission device according to any one of claims 5 to 7, wherein the controller operates the on/off switch so as to match a frequency of a current flowing through the power transmission coil.

10. A wireless power supply system comprising:
the power transmission device according to any one of claims 1 to 9; and
one or more of the power reception devices that receive power supply from the power transmission device in a non-contact manner.
